# EUROPEAN PATENT SPECIFICATION

(11) **EP 1 517 787 B1**
(45) Date of publication and mention of the grant of the patent: **04.04.2007**
(21) Application number: 03730928.3
(22) Date of filing: 14.05.2003
(51) Int. Cl.: B32B 27/10, B65D 65/40, D21H 27/10

(54) **A METHOD FOR MANUFACTURING LAMINATED HD (HIGH-DENSITY) PAPER WITH GOOD OXYGEN-BARRIER PROPERTIES, AND HD PAPER OBTAINED THEREBY**
VERFAHREN ZUR HERSTELLUNG VON LAMINIERTEM PAPIER MIT HOHER DICHTE (HD-PAPIER) MIT GUTEN SAUERSTOFFSPERREIGENSCHAFTEN UND DADURCH ERHALTENES HD-PAPIER
PROCEDE DE FABRICATION DE PAPIER CONTRE-COLLE HD (HAUTE DENSITE) PRESENTANT DE BONNES CARACTERISTIQUES D'EFFET BARRIERE A L'OXYGENE, ET PAPIER HD OBTENU SELON CE PROCEDE

(30) Priority: 15.05.2002 NO 20022338
(43) Date of publication of application: 30.03.2005
(73) Proprietor: Furuheim, Knut Magne, 1613 Fredrikstad (NO)
(72) Inventor: Furuheim, Knut Magne, 1613 Fredrikstad (NO)
(74) Representative: Bates, Philip Ian
(86) International application number: PCT/NO2003/000158
(87) International publication number: WO 2003/097351

(56) References cited:
- EP-A2- 0 313 356
- WO-A1-02/090206
- GB-A- 1 346 960
- US-A- 4 110 155
- US-A- 5 512 333
- US-B1- 6 358 576

## Description

This invention relates to a barrier material for use as packaging, particularly for articles of food, together with a method for manufacturing such a barrier material with good oxygen-barrier properties.

### Background

Approximately 4/5 of all foodstuffs are susceptible to loss and/or absorption of gasses, water vapour, flavour, odour, etc. and have to be stored in a protected environment.

Exposure to oxygen gas in particular can represent a serious problem, since oxygen is known to have a harmful effect on the flavour, texture, colour, nutritional content, etc. of foodstuffs. In addition, oxygen gas is instrumental in a number of known reactions which affect the storage durability of food, such as microbial growth, colour changes, oxidation of lipids (rancidity) and rotting of fruit, etc. Foodstuffs of this kind therefore have to be protected against the oxygen content of the atmosphere during storage, which in practice often means that the storage time of the article of food is determined by the rate of transmission of oxygen (often described as OTR) through the packaging.

Foodstuffs are often sold in small quantities in individually packaged units, with the result that the cost associated with the packing and wrapping materials in itself becomes a very important competitive factor. The importance of finding inexpensive packaging materials with an optimal balance between price and oxygen-barrier properties therefore becomes a vital competitive factor for food producers. This has resulted in a steadily increasing demand for new improved packaging materials which are both inexpensive and have satisfactory barrier properties, with the result that rapid strides are being made in developments in this field at the present time. Materials that have an OTR of 1 ml O₂/m² 24h bar or less are currently considered to be excellent for most foodstuffs.

In addition to the economic and functional aspects of food packaging, the environmental aspect will become more and more important since the food industry has a very large sales volume with extensive use of individual packaging in small quantities. The sale of foodstuffs thereby results in a far from insignificant amount of packaging waste which has traditionally been dumped on rubbish tips. However, this solution is no longer satisfactory since there are considerable problems associated with, for example, run-off to ground water from rubbish dumps, in addition to which the increasing world population and resultant amounts of rubbish means that in many densely populated areas in the world there is quite simply a lack of suitable dumps. More stringent demands are therefore placed on packaging producers for their products to be made of reproducible materials and to be recyclable or capable of being incinerated safely and converted to heat energy.

### Prior art

A laminate of aluminium foil and, for example, cardboard is an example of a well-known and long-used packaging material with excellent characteristics (OTR values down to 0.003 ml O₂/m² 24h bar, extremely flavour-tight, etc.), which has problems with the new demands with regard to environmental standard. This is due, amongst other things, to the fact that it is difficult to recycle the packaging material (the aluminium foil is too thin to be remelted) and it will produce toxic aluminium oxide when incinerated.

It has long been known that a laminate of polyolefines on some types of paper or cardboard can provide excellent barrier properties. Examples of such solutions can be found in NO 166359 and EP 0754719 where paper of greaseproof quality is coated with polyethylene. This is a very promising material for packaging food since it has the desired combination of favourable price, a high degree of reproducible raw materials, can be safely incinerated with a good caloric value without producing toxic compounds and is easy to recycle.

The oxygen barrier for such materials will normally be just below 100 ml O₂/m² 24h atm. This is rather striking since with a purely additive summation of OTR for the paper and the polyethylene, which is the rule that normally applies for laminates, an oxygen barrier B in the range 1000-4000 ml O₂/m² 24h atm is to be expected. In other words, some kind of favourable effect must be generated by coating the paper with polyethylene.

In Norwegian patent application no. 19984666 (subsequently PCT application WO 00/20212) an explanation is suggested for this favourable barrier effect that occurs when polyethylene is applied to paper with a high fibre content. It was suggested therein that the favourable barrier property is due to the formation of a crystalline layer in the polyethylene. This was assumed to be a morphological change, which occurs due to sheer forces during the coating process and which arranges the polyethylene molecules at the surface of the paper, thus forming a crystalline layer in the polyethylene at the surface of the paper. This layer is also called a transcrystalline layer. On this basis patent claims were formulated for a manufacturing process for such barrier materials where the emphasis was placed on coating temperatures and sheer stresses. It was demonstrated that an OTR of around 25 ml O₂/m² 24h atm is obtained by means of this method, and sometimes as low as 1 ml O₂/m² 24h atm, which is a substantial improvement over the processes described in NO 166359 and EP 0754719. This explanation model was provided by the same inventor as for this invention. In the rest of the world the prevailing theory for the formation of the oxygen barrier is that the polyethylene seals the pores of the paper. This model will be clarified further in the following description of this invention.

Regardless of why this favourable barrier property is created when paper is coated with polyolefines, it is a fact that known methods for producing such barrier materials are encumbered with a very great variance in OTR value when attempts are made to produce barrier materials with the best OTR values. This indicates that we still do not know how and why the barrier is created, thereby allowing chance to play a part in the production of barrier materials based on a laminate of polyolefine and paper/cardboard. With the knowledge that the storage durability of oxygen-sensitive foodstuffs is directly proportional to the packaging's OTR value, this uncertainty regarding the packaging's OTR value becomes completely unacceptable for many food producers.

### The object of the invention

It is therefore an object of this invention to provide a method for production of packaging materials comprising a laminate of a polyolefine on paper/cardboard where the formation of the oxygen-tight layer is controlled so as to provide consistent product qualities.

It is also an object of this invention to provide a packaging material comprising a laminate of paper and polyethylene which has very low as well as very little variance in the oxygen transmission rate from one production run to the next.

### List of figures

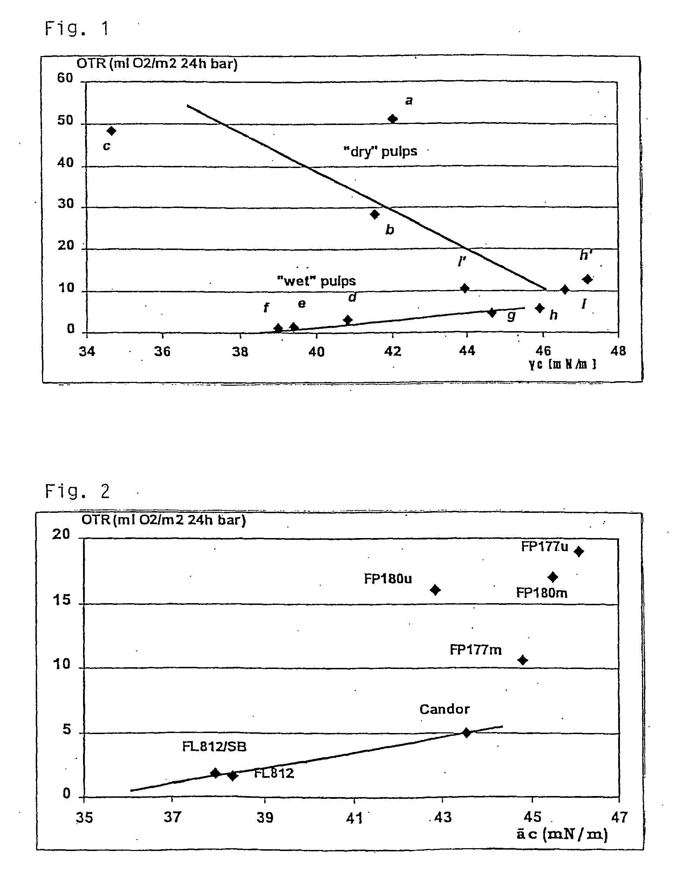

Figure 1 illustrates experimentally verified correlations between average surface energy of the paper and the polyethylene in a laminate consisting of paper coated with polyethylene of type HDPE and the oxygen transmission rate (OTR) achieved for the laminate. The bottom curve applies to a number of types of paper produced from wet pulp, while the upper curve illustrates the same for paper types produced from dry pulp.
Figure 2 illustrates experimentally verified correlations between average surface energy of the paper and the polyethylene in a laminate consisting of paper coated with polyethylene of type LDPE and the oxygen transmission rate (OTR) achieved for the laminate.

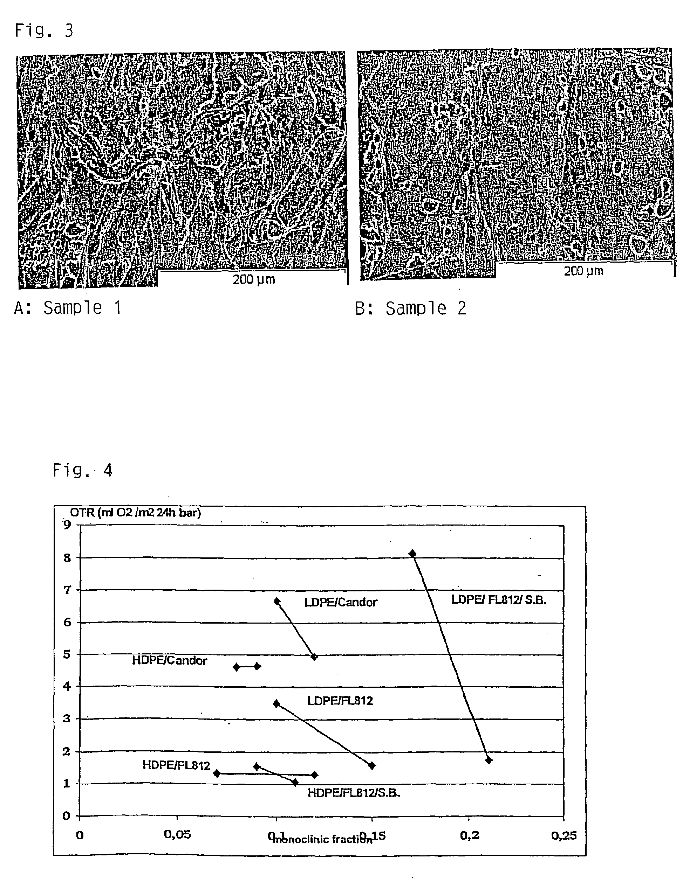

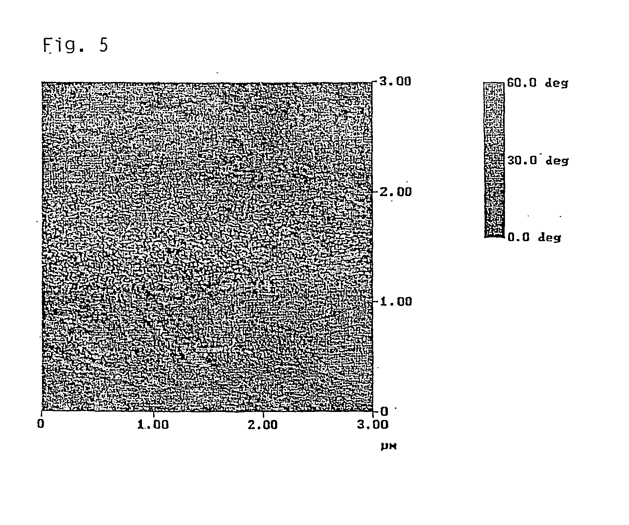

Figure 3 depicts SEM photographs (200x) of the internal interface of a polyethylene film of type HDPE after the paper has been removed. Sample 1 is a laminate that had an OTR value of 51.1 ml O₂/m² 24h atm, while sample 2 had an OTR value of 3.1 ml O₂/m² 24h atm. Both samples demonstrate approximately the same degree of blistering.
Figure 4 illustrates the correlation between the magnitude of the monoclinic fraction and the OTR value in the samples with the respective paper types of "wet" sulphite paper with different surface energy. The percentage of monoclinic crystallinity is increased with increased sheer forces, i.e. increased pressure on the squeeze roller. Candor: non-AKD hydrophobic. FL812/S.B.: hydrophobic, steaming chamber-treated paper.

### Description of the invention

The object of the invention can be achieved by means of a method as defined in the patent claims and in the following description of the invention.

The inventive method is based on research results carried out by the inventor in a doctorate project demonstrating that the barrier is created on account of morphological changes in polyethylene when the polymer is applied to the paper. When the polymer mass is attached to the surface of the paper before being subjected to rolling with pressure load, sheer forces are created that orientate the polymer molecules at the surface of the paper. Together with cooling, this initiates the formation of a transcrystalline layer at the surface of the paper. Thus the plastic cannot be regarded as a passive sealing material as in the prevailing explanation of the synergy effect between the plastic and the paper. This feature is known from the inventor's earlier Norwegian patent application no. 19984666 (subsequently PCT application WO 00/20212).

The results, however, also illustrate two new features, one of which is that the formation of the transcrystalline layer is promoted by the use of paper made of "wet" pulp, i.e. pulp that was not permitted to dry before the production of the paper. In conventional paper production use is made almost exclusively of pulp with dried fibres in order, amongst other things, to reduce transport costs. However, the drying results in a hornification process where the fibres in the pulp spread out and become more crystalline and needle-shaped in long thin fibres. The inventor's experiments demonstrate that this process is inopportune with regard to the formation of the gas-tight crystalline layer in the polyolefine, and the use of dry fibres in the paper should therefore be avoided if a low OTR is required. This "hornification process" occurs when the percentage of water in the pulp is less than approximately 30% by weight. Ready-dried pulp contains approximately 10% water by weight. Similarly, the term wet pulp is used for pulp that has from 30% water by weight or more, with an upper limit of pure water.

The second new feature is that it has been found that the difference between the paper's and the polyolefine's surface energy also has a strong influence on the formation of the gas-tight transcrystalline layer. Here there is almost a linear correlation indicating that the smaller the difference in surface energy, the denser the crystalline layer. This effect is illustrated in the bottom curve in Figure 1 illustrating OTR value as a function of the average of the surface energy of the paper and the polyolefine film for a number of types of paper coated with polyethylene of type HDPE. In the bottom curve only paper produced from wet pulp is plotted. Note that the curve approaches an OTR value equal to 0 for paper that has the same surface energy as a HDPE film, which is measured at 38.4 mN/m. Exactly the same tendency can be seen in the curve in Figure 2 illustrating the same but now for different paper coated with polyethylene of type LDPE. Here too the OTR value approaches 0 for paper with the same surface energy as the LDPE film (36.2 mN/m). In the figures the curve is given as the average value of the surface tension of both the paper and the polyethylene film, but this curve has the same tendency and zero point as a curve based on only the paper's surface tension since the polyethylene's surface tension remains the same regardless of which paper it is laminated to. The only difference is that the curve has a flatter profile, i.e. a smaller gradient, which is irrelevant in this connection.

These are highly unexpected and striking results that conflict with the prevailing theory in the field. A person skilled in this field is not familiar with the significance of the method of manufacturing the paper, and has traditionally placed all the focus on the importance of the actual type of paper (which is of a standard type produced from dry pulp) and how to treat it before lamination with the polyethylene. This can be seen, for example, in two newly published technical articles (1 and 2), where paper of the standard type (dry pulp) has been employed and the effect has been studied of the paper's surface energy on the OTR of the finished laminate. The importance of increasing the paper's surface energy is discussed there, since the results from articles 1 and 2 show that better adhesion is obtained between the materials and improved barrier properties the higher the surface energy of the paper is during the coating process. A person skilled in the art is aware that the paper's surface energy can be increased by various oxidation processes including treatment with ozone. This prevailing theory can be illustrated, for example, by the top curve in Figure 1.

According to this prevailing theory the barrier properties are due to the fact that the polyolefine seals the pores of the paper, and the greater the surface energy of the paper surface, the more tightly the polyethylene will seal the pores through improved adhesion. This theory assumes that there is good contact between the materials in the interface in order to achieve a minimum net area for the polyolefine film that is subjected to the passage of oxygen (a 25 µm polyethylene film has an OTR in the order of 7000 ml O₂/m² 24h atm). This theory has been tested by the inventor by studying the surface of coated polyethylene films and finds a considerable element of gas bubbles in the polyethylene phase against the paper of around 6-8% of the total area. In addition samples have been found that have a good oxygen barrier and a bubble-covered area that is at least as large as samples with a poor oxygen barrier. This is illustrated in Figure 3 where sample 1 has an OTR of 51.1 ml O₂/m² 24h atm and sample 2 an OTR of 3.1 O₂/m² 24h atm. From the figures it can be seen that both samples manifest intensive blistering to approximately the same extent despite the great difference in OTR value. This is a clear indication that the prevailing theory cannot be correct. The barrier effect must be due either to factors radically different to pore sealing, or additional factors must come into the picture.

As mentioned, the inventor's studies of the polyolefine film after coating have shown that the barrier property is directly linked to the formation of the crystalline layer in the polyolefine at the surface of the paper. In a more detailed study it was found that this layer has a monoclinic crystal structure as opposed to the polyolefine's bulk volume, which has orthorhombic unit structures. Furthermore, it was found that the percentage of monoclinic crystal structure in relation to the percentage of orthorhombic unit structures also has an effect on the barrier properties. The correlation is that the higher the percentage of monoclinic crystal structure, the lower the OTR value for the laminate. This is illustrated for a number of types of paper in Figure 4, which illustrates the OTR value for the laminate as a function of the percentage of monoclinic crystal structure in the polyethylene film. From the inventor's earlier patent application no. NO 19984666 (subsequently PCT application WO 00/20212), it is known that substantial sheer forces during coating promote the formation of monoclinic crystal structure. A simple way of achieving substantial sheer stresses is to employ strong roll pressure when applying the polyolefine film. The use is therefore preferred of a pressure of more than 250 kPa, and most preferred a roll pressure of 400 kPa or more, but it is also possible to achieve a good, dense crystalline layer by leaving it to time. It has also been shown that storage can give a substantial improvement in the OTR value. This can be seen from Tables 2 and 3 which can be found in Example 3 later in the description. These illustrate that storage lowers the OTR value to the same value as that provided by a roll pressure of 400 kPa. This may indicate that when the paper has the same surface energy as the polyolefine film, the thermodynamic energy conditions in the laminate will be favourable for the formation of the crystalline layer (ΔG for the formation is less than 0). This is a great advantage since when the layer is thermodynamically stable, the barrier properties will also become stable with time. The film will not lose its properties during storage, but on the contrary the properties can be expected to improve.

In conclusion, the inventive method is based on the recognition of the discoveries that the barrier properties of laminates of the type where paper is coated with a polyolefine are attributable to the formation of a transcrystalline layer in the polyolefine film at the surface of the paper instead of pore-sealing in the surface of the paper, which is the prevailing theory. This layer, moreover, is promoted by a combination of the use of wet pulp during the production of the paper and the adjustment of the paper's surface energy during coating to approximate as closely as possible the polyolefine's surface energy. This usually means reducing the paper's surface energy, which is completely contrary to general expert knowledge in the field that states that the higher the paper's surface energy during coating, the lower the OTR values of the laminate.

All known methods of surface treating paper in order to lower the surface energy to the polyolefine's surface energy may he employed. Such processes must be considered to come within the scope of the competence of a person skilled in the art, and thereby within the concept of the invention providing they are combined with the use of paper produced by means of wet pulp. These methods comprise steam treatment before glazing (calendring), internal sizing with a neutral hydrophobic agent, a high comminution rate for the pulp, surface sizing or other chemical surface treatment of the paper.

The closest to optimal conditions for obtaining low OTR values for laminate consisting of paper coated with polyethylene are created by means of highly comminuted sulphite cellulose pulp which is not pre-dried during the production of the paper, internal sizing of the paper with a neutral hydrophobic agent and steam treatment of the surface of the paper before the final calendring (rolling).

### Detailed description of the invention

The invention will now be described in greater detail with reference to examples of the method.

All numerical values of surface energies used in this application are calculated on the basis of the development of contact angles in water and tetrabrommethane on the surface of the respective material samples. These were measured with a Fibro DAT 1100 Mk II instrument according to Tappi T558, ASTM D5725 at the paper industry's research institute in Trondheim, Norway. All measurements of oxygen transmission rates (OTR) were carried out according to ASTM D3985 (Standard test method for oxygen gas transmission) by means of the instrument OXTRAN 10/50. The measurements were conducted in the premises of Matforsk at Ås, Norway.

### Example 1. Oxygen barrier in laminate with paper made of wet sulphite pulp contra dry sulphate pulp

Table 1 illustrates that paper made of wet sulphite pulp gives a significantly better oxygen barrier than paper made of "dry" sulphate pulp with otherwise identical coating conditions.

**Table 1: Results of measurements of OTR and HDPE-coated HD paper made of dry (sulphate) and "wet" (sulphite) pulp respectively. The surface energy for each individual paper is also given. A film of HDPE (CG8410) has a surface energy of 38.4mN/m.**

| **Sample** | **Paper** | **OTR^{*}** | **Surface energy (mN/m)** |
|---|---|---|---|
| a | Super Perga Parchment, 4440. "dry" sulphate, C | 51.1 | 45.7 |
| b | Super Perga Parchment, 4450:"dry" sulphate, D | 28.2 | 44.7 |
| c | Super Perga Parchment, 4460:"dry" sulphate, Z | 48.5 | 30.9 |
| d | Super Perga Parchment, 4470:"wet" sulphite, Z | 3.1 | 43.2 |

| | | | |
|---|---|---|---|
| *Given as ml O₂/m² 24h atm | | | |

### Example 2. Oxygen barrier in laminate with paper made of wet sulphite pulp which is treated in a steaming chamber contra laminate of similar paper which is not treated in a steaming chamber

Treatment in a steaming chamber lowers the surface energy of the paper and gives a slightly better barrier for HDPE. There is every indication that the contact between the materials is improved. This results in a lowering of the average surface energy, thus lowering ΔG (Gibbs free energy) for the formation of new crystalline structures on the surface of the paper by means of storage (particularly for LDPE). This results in lower OTR. This can be seen in Tables 2 and 3. Here CG 8410 polyethylene is of type HDPE and CA7230 is of type LDPE. The same applies in Table 4.

**Table 2: Results of measurements of OTR of PE-coated HD paper made of "wet" (sulphite) pulp (FL812). CA7230: 36.2 inN/m, FL812: 40.4 mN/m**

| **Polymer** | **Roll pressure kPa** | **OTR ml/m² 24h atm** | **OTR, Stored ml/m² 24h atm** |
|---|---|---|---|
| CG 8410 | 250 | 1.32 | 1.61 |
| CG 8410 | 400 | 1.29 | 1.31 |
| CA 7230 | 250 | 3.49 | 2.02 |
| CA 7230 | 400 | 1.59 | 1.41 |

**Table 3: Results of measurements of OTR of PE-coated steaming chamber-treated HD paper made of "wet" (sulphite) pulp (FL812) 39.6 mN/m**

| **Polymer** | **Roll pressure kPa** | **OTR ml/m² 24h atm** | **OTR, Stored ml/m² 24h atm** |
|---|---|---|---|
| CG 8410 | 250 | 1.55 | 1.55 |
| CG 8410 | 400 | 1.07 | 0.92 |
| CA 7230 | 250 | 8.13 | 2.36 |
| CA 7230 | 400 | 1.75 | 1.78 |

### Example 3. Oxygen barrier in laminate with paper made of "wet" sulphite pulp which is internally sized contra laminate of similar paper which is not internally sized.

**Table 4: Results of measurements of OTR of PE-coated HD paper made of "wet" (sulphite) pulp (Candor paper), which is not internally sized with AKD size. 50.9 mN/m.**

| **Polymer** | **Roll pressure kPa** | **OTR ml/m² 24h atm** | **OTR, Stored ml/m² 24h atm** |
|---|---|---|---|
| CG 8410 | 250 | 4.65 | 5.02 |
| CG 8410 | 400 | 4.63 | 4.53 |
| CA 7230 | 250 | 6.68 | 4.77 |
| CA 7230 | 400 | 4.96 | 3.33 |

Compared with paper which is internally sized, Candor paper gives a less satisfactory oxygen barrier. This barrier is nevertheless better than that achieved with internally sized paper of paper of higher density containing 60, 90 or 100% of pre-dried sulphate pulp.

## Claims

1. A method for manufacturing a barrier material with good gas barrier properties, particularly for use as packaging in the food industry, where the barrier material comprises a laminate of paper coated with a polyolefine,
**characterised in that**
- the paper is manufactured from wet pulp which has not been permitted to dry up before the paper was produced, and
- before applying the polyolefine to the paper, the paper is modified in such a manner that its surface energy is changed to approximate to the same value as the polyolefine's surface energy.

2. A method according to claim 1,
**characterised in that** wet pulp is wood pulp where the percentage of water is from 30% by weight or more.

3. A method according to claim 2,
**characterised in that** the fibrous material is cellulose fibre with a high or medium comminution rate, and that the paper's surface energy is changed in order to be as similar as possible to the polyethylene's surface energy.

4. A method according to claim 3,
**characterised in that** the paper is produced from finely ground wet cellulose pulp with a high content of hemicellulose, such as sulphite pulp or polysulphide pulp.

5. A method according to any of claims 1-4,
**characterised in that** the paper is treated with steam in the paper machine system before glazing (calendring).

6. A method according to any of claims 1-5,
**characterised in that** the paper is internally sized with a neutral hydrophobic agent, such as AKD.

7. A method according to any of claims 1-6,
**characterised in that** a roll pressure is employed of at least 250 kPa, preferably 400 kPa or more when applying the polyolefine to the paper.

8. A method according to any of claims 1-6,
**characterised in that** a polyethylene such as LDPE or HDPE or a polypropylene is employed as a polyolefine.

9. A method according to claim 8,
**characterised in that**
- when polyethylene of type HD is used, the paper's surface energy is modified before coating so as to be as close as possible to 38.4 mN/m, and
- when polyethylene of type LD is used, the paper's surface energy is modified before coating so as to be as close as possible to 36.2 mN/m.

10. A method according to any of claims 1-9,
**characterised in that** several layers are laminated together in order to form a more dimensionally stable packaging product, where at least one of the layers in the laminate may be composed of a layer of cardboard or pasteboard.

11. A barrier material for use as packaging, particularly for use in connection with foodstuffs, comprising a fibrous layer, preferably of cellulose material coated with a polyolefine on at least one side,
**characterised in that** it is produced by means of the methods indicated in claims 1-10.

12. A barrier material according to claim 11,
**characterised in that** the fibrous material is laminated together with additional fibrous layers and/or a cardboard material via the outer polyolefine layer and that the outside of the laminate may be covered with additional protective layers, particularly of polyolefine.

## Patentansprüche

1. Ein Verfahren zur Herstellung eines Sperrmaterials mit guten Gassperreigenschaften, insbesondere zur Verwendung als Verpackung in der Nahrungsmittelindustrie, wobei das Sperrmaterial ein Laminat aus Papier, das mit einem Polyolefin beschichtet ist, enthält, das **dadurch gekennzeichnet ist, dass**
- das Papier aus nassem Zellstoff hergestellt wird, der nicht vor der Herstellung des Papiers trocknen gelassen wurde, und
- vor dem Auftragen des Polyolefins auf das Papier das Papier in einer solchen Weise modifiziert wird, dass dessen Oberflächenenergie auf ungefähr den gleichen Wert wie die Oberflächenenergie des Polyolefins verändert wird.

2. Ein Verfahren gemäß Anspruch 1, das **dadurch gekennzeichnet ist, dass** der nasse Zellstoff Holzzellstoff ist, bei dem der Prozentanteil an Wasser 30 Gewichtsprozent oder mehr ist.

3. Ein Verfahren gemäß Anspruch 2, das **dadurch gekennzeichnet ist, dass** das Fasermaterial Zellulosefaser mit einem hohen oder mittleren Vermahlungsgrad ist, und dass die Oberflächenenergie des Papiers verändert wird, um der Oberflächenenergie des Polyethylens so ähnlich wie möglich zu sein.

4. Ein Verfahren gemäß Anspruch 3, das **dadurch gekennzeichnet ist, dass** das Papier aus fein zermahlenem nassen Zellulosezellstoff mit einem hohen Gehalt an Hemizellulose wie Sulfitzellstoff oder Polysulfidzellstoff hergestellt wird.

5. Ein Verfahren gemäß einem der Ansprüche 1 bis 4, das **dadurch gekennzeichnet ist, dass** das Papier mit Dampf in dem Papiermaschinensystem vor dem Glätten (Kalandrieren) behandelt wird.

6. Ein Verfahren gemäß einem der Ansprüche 1 bis 5, das **dadurch gekennzeichnet ist, dass** das Papier innen mit einem neutralen hydrophoben Mittel wie AKD verleimt wird.

7. Ein Verfahren gemäß einem der Ansprüche 1 bis 6, das **dadurch gekennzeichnet ist, dass** ein Walzendruck von wenigstens 250 kPa, vorzugsweise 400 kPa oder mehr, eingesetzt wird, wenn das Polyolefin auf das Papier aufgetragen wird.

8. Ein Verfahren gemäß einem der Ansprüche 1 bis 6, das **dadurch gekennzeichnet ist, dass** ein Polyethylen wie LDPE (Polyethylen niedriger Dichte) oder HDPE (Polyethylen hoher Dichte) oder ein Polypropylen als ein Polyolefin eingesetzt wird.

9. Ein Verfahren gemäß Anspruch 8, das **dadurch gekennzeichnet ist, dass**
- wenn Polyethylen vom HD Typ verwendet wird, die Oberflächenenergie des Papiers vor dem Beschichten so modifiziert wird, dass sie so nah wie möglich bei 38,4 mN/m liegt, und
- wenn Polyethylen vom LD Typ verwendet wird, die Oberflächenenergie des Papiers vor dem Beschichten so modifiziert wird, dass sie so nah wie möglich bei 36,2 mN/m liegt.

10. Ein Verfahren gemäß einem der Ansprüche 1 bis 9, das **dadurch gekennzeichnet ist, dass** mehrere Schichten miteinander laminiert werden, um ein formstabileres Verpackungsprodukt zu bilden, wobei wenigstens eine der Schichten in dem Laminat aus einer Schicht aus Karton oder Pappe bestehen kann.

11. Ein Sperrmaterial zur Verwendung als Verpackung, insbesondere zur Verwendung in Verbindung mit Nahrungsmitteln, umfassend eine Faserschicht, vorzugsweise aus Zellulosematerial, die mit einem Polyolefin auf wenigstens einer Seite beschichtet ist, das **dadurch gekennzeichnet ist, dass** es mittels der Verfahren, die in den Ansprüchen 1 bis 10 genannt werden, hergestellt wird.

12. Ein Sperrmaterial gemäß Anspruch 11, das **dadurch gekennzeichnet ist, dass** das Fasermaterial mit zusätzlichen Faserschichten und/oder einem Pappmaterial über die äußere Polyolefinschicht laminiert ist und dass die Außenseite des Laminats mit zusätzlichen Schutzschichten, insbesondere aus Polyolefin, bedeckt sein kann.

## Revendications

1. Procédé de fabrication d'un matériau-barrière ayant de bonnes propriétés de barrière aux gaz, en particulier pour une utilisation en tant qu'emballage dans l'industrie alimentaire, où le matériau-barrière comprend un stratifié de papier revêtu d'une polyoléfine, **caractérisé en ce que** :
- le papier est fabriqué à partir de pâte humide que l'on n'a pas laissé sécher avant que le papier ne soit produit, et
- avant d'appliquer la polyoléfine au papier, le papier est modifié de telle sorte que son énergie de surface est changée pour s'approcher de la même valeur que l'énergie de surface de la polyoléfine.

2. Procédé selon la revendication 1, **caractérisé en ce que** la pâte humide est une pâte de bois où le pourcentage d'eau est de 30 % en poids ou plus.

3. Procédé selon la revendication 2, **caractérisé en ce que** le matériau fibreux est une fibre de cellulose ayant un taux de comminution élevé ou moyen, et **en ce que** l'énergie de surface du papier est changée afin d'être aussi similaire que possible à l'énergie de surface du polyéthylène.

4. Procédé selon la revendication 3, **caractérisé en ce que** le papier est produit à partir d'une pâte de cellulose humide finement moulue ayant une teneur élevée en hémicellulose, telle que la pâte au bisulfite ou la pâte au polysulfure.

5. Procédé selon l'une quelconque des revendications 1 à 4, **caractérisé en ce que** le papier est traité à la vapeur dans le système de machine à papier avant glaçage (calandrage).

6. Procédé selon l'une quelconque des revendications 1 à 5, **caractérisé en ce que** le papier est collé intérieurement avec un agent hydrophobe ou neutre, tel que AKD.

7. Procédé selon l'une quelconque des revendications 1 à 6, **caractérisé en ce qu'**une pression de laminage est employée, d'au moins 250 kPa, de préférence de 400 kPa ou plus lors de l'application de la polyoléfine au papier.

8. Procédé selon l'une quelconque des revendications 1 à 6, **caractérisé en ce qu'**un polyéthylène tel que LDPE ou HDPE ou un polypropylène est employé en tant que polyoléfine.

9. Procédé selon la revendication 8, **caractérisé en ce que** :
- lorsqu'un polyéthylène de type HD est utilisé, l'énergie de surface du papier est modifiée avant revêtement de sorte à être aussi proche que possible de 38,4 mN/m, et
- lorsqu'un polyéthylène de type LD est utilisé, l'énergie de surface du papier est modifiée avant revêtement de sorte à être aussi proche que possible de 36,2 m N/m.

10. Procédé selon l'une quelconque des revendications 1 à 9, **caractérisé en ce que** plusieurs couches sont stratifiées ensemble afin de former un produit d'emballage dimensionnellement plus stable, où au moins l'une des couches du stratifié peut être composée d'une couche de carton ou de carton contrecollé.

11. Matériau-barrière pour une utilisation en tant qu'emballage, en particulier pour une utilisation en rapport avec les denrées alimentaires, comprenant une couche fibreuse, de préférence de matériau de cellulose revêtu d'une polyoléfine sur au moins un côté, **caractérisé en ce qu'**il est produit au moyen des procédés indiqués dans les revendications 1 à 10.

12. Matériau-barrière selon la revendication 11, **caractérisé en ce que** le matériau fibreux est stratifié conjointement avec des couches fibreuses supplémentaires et/ou un matériau de carton via la couche de polyoléfine externe et **en ce que** l'extérieur du stratifié peut être couvert de couches protectrices supplémentaires, en particulier de polyoléfine.
